# EUROPÄISCHE PATENTSCHRIFT

(11) **EP 3 902 730 B1**
(45) Veröffentlichungstag und Bekanntmachung des Hinweises auf die Patenterteilung: **18.10.2023**
(21) Anmeldenummer: 19832394.1
(22) Anmeldetag: 20.12.2019
(51) Int. Cl.: B61D 27/00, B60H 1/00, B60H 1/24

(54) **FAHRZEUG**
VEHICLE
VÉHICULE

(30) Priorität: 27.12.2018 DE 102018133627
(43) Veröffentlichungstag der Anmeldung: 03.11.2021
(73) Patentinhaber: Bombardier Transportation GmbH, 10785 Berlin (DE)
(72) Erfinder: LEVERENZ, Uwe, 01097 Dresden (DE)
(74) Vertreter: Zimmermann & Partner Patentanwälte mbB
(86) Internationale Anmeldenummer: PCT/EP2019/086811
(87) Internationale Veröffentlichungsnummer: WO 2020/136138

(56) Entgegenhaltungen:
- DE-A1-102014 214 581
- DE-A1-102016 209 589
- JP-A- H 029 908

## Beschreibung

### Technisches Gebiet

Die vorliegende Erfindung betrifft ein Personentransportmittel mit einem Wagenkasten und einem Innenraum zum Transport von Fahrgästen. Weiterhin betrifft die Erfindung ein Verfahren zum Betrieb eine Lüftungsvorrichtung eines solchen.

### Vorbekannter Stand der Technik

Allgemein sind Personentransportmittel zum Transport von Fahrgästen bekannt, beispielsweise ausgebildet als Fahrzeug des öffentlichen Nahverkehrs, insbesondere als Straßenbahn, U-Bahn, S-Bahn, Omnibus, etc.

Dabei werden die Innenräume solcher Personentransportmittel aufwendig klimatisiert, sodass der Komfort für Fahrgäste optimiert wird. Beispielsweise werden Klimaanlagen und Gebläse an unterschiedlichen Stellen eines Personentransportmittels vorgesehen, sodass alle in dem Innenraum des Personentransportmittels befindlichen Personen bestmöglich mit warmer oder kühler Luft versorgt werden können.

Die deutsche Offenlegungsschrift DE 3127024 A1 offenbart eine Klimaanlage für einen Reisezugabteilwagen. Dabei wird eine zentrale Heizanlage zum Bereitstellen von erwärmter Heizungsluft vorgesehen, wobei in jedem Abteil ein zusätzlicher Nachheizkörper für die individuelle Einstellung einer Abteiltemperatur verbaut ist.

Aus der US 6,416,116 B1 ist ein Fahrzeug des Personennahverkehrs bekannt, wobei eine Klimaanlage warme oder gekühlte Luft bereitstellen kann. Spezifisch ist ein Klappventil vorgesehen, um gekühlte Luft aus einem ersten Lüftungskanal in einen zweiten, longitudinalen Lüftungskanal über den Fenstern des Fahrzeugs einströmen lassen zu können.

Die DE 10 2014 214 581 A1 offenbart eine Luftverteileinrichtung zur Verteilung von einströmender Luft im Innenraum eines Schienenfahrzeugs. Die Luftverteileinrichtung weist einen ersten Luftkanal mit ersten Luftauslässen, die in einem Deckenbereich eines Innenraums des Schienenfahrzeugs angeordnet sind, einen zweiten Luftkanal mit zweiten Luftauslässen, die in einem Bodenbereich des Innenraums des Schienenfahrzeugs angeordnet sind, zumindest eine Verbindungsöffnung, durch welche der erste Luftkanal und der zweite Luftkanal miteinander verbunden sind, und einen Lüfter auf, der zum Beförderung von Luft von dem ersten Luftkanal in den zweiten Luftkanal, oder umgekehrt, eingerichtet ist. Durch die Art des Betriebs des Lüfters ist eine erste Luftmenge, die durch die ersten Luftauslässe in den Deckenbereich einströmt, und eine zweite Luftmenge, die durch die zweiten Luftauslässe in den Bodenbereich einströmt, in ihrem Verhältnis zueinander einstellbar.

Die DE 10 2016 209 589 A1 beschreibt eine Luftverteileinrichtung für ein Fahrzeug, welche einen Lufteinlass, einen Warmluftauslass, einen Haupt-Kaltluftauslass und einen Neben-Kaltluftauslass aufweist. Die Luftverteileinrichtung hat eine Warmluftführung, durch welche der Warmluftauslass mit dem Lufteinlass verbunden ist, eine Kaltluftführung, durch welchen der Haupt-Kaltluftauslass und der Neben-Kaltluftauslass mit dem Lufteinlass verbunden sind, und eine Absperreinrichtung zum Absperren und Freigeben der Kaltluftführung.

Die JP H02 9908 A beschreibt eine Lüftungsvorrichtung mit einem Splitgerät.

### Nachteile des Stands der Technik

Die bisher bekannten technischen Lösungen und Ausführungsformen sind jedoch entweder sehr komplex aufgebaut, gestatten keine effiziente Raumnutzung und erfordern möglicherweise ein hohes Maß an Wartung.

### Problemstellung

Aufgabe der vorliegenden Erfindung ist es daher, ein Personentransportmittel mit einer Lüftungsvorrichtung bereitzustellen, wobei die Lüftungsvorrichtung effizient hinsichtlich des verfügbaren Bauraums vorgesehen ist, und gleichzeitig die Nachteile des Stands der Technik verhindert oder zumindest vermindert werden.

### Erfindungsgemäße Lösung

Die obige Aufgabe wird durch ein Personentransportmittel nach Anspruch 1 und durch ein Verfahren nach Anspruch 6 gelöst. Weitere Ausführungsformen der genannten Gegenstände ergeben sich aus den abhängigen Unteransprüchen und/oder aus zusätzlich diskutierten Ausführungsformen.

Erfindungsgemäß weist das Personentransportmittel einen Wagenkasten mit einem Innenraum auf. Der Innenraum wird durch ein Fahrzeugboden, eine darüber liegende Fahrzeugdecke und durch Seitenwände begrenzt.

Die im Kontext dieser Erfindung gemachten Angaben zu einer Längsrichtung, Vertikalrichtung und/oder Querrichtung beziehen sich auf einen bestimmungsgemäßen Einsatz des Personentransportmittels auf einer ebenen Fläche. Die Längsrichtung ist dabei im Wesentlichen gleich einer Längsrichtung eines Wagenkastens des Personentransportmittels, oder auch einer Fahrtrichtung bei Geradeausfahrt. Die Querrichtung bestimmt sich bezüglich der Gestalt des Wagenkastens des Personentransportmittels und kann somit senkrecht zu einer möglichen Fahrtrichtung bei Geradeausfahrt ausgerichtet sein. Die Vertikalrichtung verläuft senkrecht zur Querrichtung und zur Längsrichtung.

Zur Versorgung des Innenraums mit Luft, insbesondere mit gekühlter und/oder erwärmter Luft, weist das Personentransportmittel eine Lüftungsvorrichtung auf.

Die Lüftungsvorrichtung wird mindestens durch ein Klimagerät, insbesondere mit einem Warmluftauslass und einem Kaltluftauslass, ein Zuluftkanalsystem zum Zuführen von Luft in den Innenraum und durch eine zentrale Luftschnittstelle gebildet.

Das Klimagerät kann dabei so gestaltet sein, dass Warmluftauslass und Kaltluftauslass zusammenfallen, sodass das Klimagerät insbesondere ausschließlich einen einzigen, insbesondere wesentlichen, Luftauslass aufweist. In einem solchen Fall fungiert der einzige Luftauslass zeitweise als Warmluftauslass und zeitweise als Kaltluftauslass. Insbesondere ist die Luftführung durch das Klimagerät dabei rein seriell ausgeführt. Die Formulierung *"*ein einziger, wesentlicher Luftauslass*"* soll verdeutlichen, dass das Klimagerät möglicherweise Undichtigkeiten oder weitere minimale Auslässe aufweisen kann, wobei ein wesentlicher Teil, insbesondere zumindest 90 % des Volumenstroms, aus dem einzigen, wesentlichen Luftauslass ausströmen kann, und insbesondere keine weiteren parallelen Luftauslässe gezielt vorgesehen sind.

Denkbar ist zum Beispiel, dass das Klimagerät Umgebungsluft über die zentrale Luftschnittstelle in das Kanalsystem fördern kann, wobei die geförderte Luft innerhalb des Klimageräts ähnlich einem Föhn erwärmbar ist oder unbehandelt bleiben kann.

Weiterhin kann das Klimagerät zumindest teilweise strömungstechnisch parallel gestaltet sein. Das heißt, innerhalb des Klimageräts sind mindestens zwei parallele Strömungskanaleinrichtungen vorhanden, welche in einem, insbesondere einem einzigen Luftauslass zusammengeführt werden können. Auch in diesem Fall fungiert der einzige Luftauslass zeitweise als Warmluftauslass und zeitweise als Kaltluftauslass.

Alternativ ist denkbar, dass die mindestens zwei parallelen Strömungskanaleinrichtungen unter Ausbildung von einem separaten Warmluftauslass und einem separaten Kaltluftauslass eine Auslassschnittstelle des Klimageräts bilden.

Gemäß einer Ausführungsform kann das Klimagerät mit einer Heizeinrichtung und einer parallel dazu angeordneten Kühleinrichtung ausgebildet sein. In einem solchen Fall kann das Klimagerät sowohl erwärmte, als auch gekühlte Luft über parallel angeordnete Strömungseinrichtungen bereitstellen.

Beispielsweise kann das Klimagerät als ein Klimamodul im Dachbereich des Wagenkastens vorgesehen sein, wobei die konditionierte Luft entweder über einen einzigen als Warmluftauslass und Kaltluftauslass fungierenden, kombinierten Luftauslass, oder über einen separaten Warmluftauslass und einem separaten Kaltluftauslass an weitere Komponenten der Lüftungsvorrichtung weitergegeben werden kann.

Weiterhin ist der Warmluftauslass und der Kaltluftauslass oder der kombinierte Luftauslass des Klimageräts mit der zentralen Luftschnittstelle verbunden, welche die Schnittstelle zu dem Zuluftkanalsystem bildet. Insbesondere kann die zentrale Luftschnittstelle dazu dienen, einen gegenständlichen und separaten Kaltluftauslass und Warmluftauslass zusammenzuführen, sodass an der Schnittstelle zwischen Zuluftkanalsystem und Klimagerät, also an der zentralen Luftschnittstelle ein kombinierter Luftauslass ausgebildet wird.

Insbesondere kann die zentrale Luftschnittstelle funktional zum Zusammenführen des Kaltluftauslasses und des Warmluftauslasses des Klimageräts definiert sein. Infolgedessen kann die zentrale Luftschnittstelle bezüglich ihrer körperlichen Gestalt sehr klein, insbesondere als Übergang von Klimagerät zum Kanalsystem und/oder als eine die warme und kalte Luftströmung mischende Komponente des Klimageräts ausgestaltet sein. Beispielsweise ermöglicht die zentrale Luftschnittstelle einen Einsatz von Klimageräten, die nur über einen Auslass, sowohl für Warmluft als auch für Kaltluft, verfügen.

Folglich versorgt das Klimagerät das Zuluftkanalsystem über die rein funktional und nicht gegenständlich gebildete Luftschnittstelle oder über die gegenständlich ausgebildete zentrale Luftschnittstelle mit einem Luftstrom. Das Zuluftkanalsystem hat die Aufgabe den Luftstrom aus dem Klimagerät in geordneter und zielgerichteter Art und Weise in den Innenraum des Wagenkastens zu leiten.

Das Zuluftkanalsystem weist mindestens einen im Deckenbereich der Fahrzeugdecke angeordneten Deckenkanal, mindestens einen vom Deckenkanal abführenden Stichkanal und mindestens eine aktive Manipulationseinrichtung zum Manipulieren des Luftstroms durch den Stichkanal auf.

Der Stichkanal führt von dem Deckenkanal bis in einen Bodenbereich des Fahrzeugbodens, wobei der Stichkanal im Bodenbereich mit einem Bodenauslass ausgestattet ist. Insbesondere kann der Begriff *"*Bodenbereich*"* als ein Volumen verstanden werden, welches einen in Vertikalrichtung unteren Teil im Bereich des Bodens des Personentransportmittels beschreibt. Beispielsweise könnte eine Auslassöffnung des Stichkanals als Bodenauslass interpretiert werden, falls der Abstand der Auslassöffnung in Vertikalrichtung von einer Oberfläche des Fahrzeugbodens im Innenraum nicht mehr als 90 cm, insbesondere nicht mehr als 60 cm, weiterhin insbesondere nicht mehr als 40 cm und bevorzugt nicht mehr als 25 cm betrüge.

Der Deckenkanal ist mit einem im Deckenbereich angeordneten Deckenauslass versehen. Die Definition des Begriffs *"*Deckenbereich*"* kann analog zum Begriff *"*Bodenbereich*"* erfolgen. Insbesondere gilt ein Luftauslass im Deckenbereich als Deckenauslass, wenn dieser in Vertikalrichtung von einer maximalen Innenhöhe des Innenraums nicht mehr als 90 cm, insbesondere nicht mehr als 60 cm, weiterhin insbesondere nicht mehr als 40 cm und bevorzugt nicht mehr als 25 cm beabstandet wäre.

Die aktive Manipulationseinrichtung ist so gestaltet, dass damit ein Luftstrom durch den Stichkanal unterstützt werden kann. Insbesondere ist die Manipulationseinrichtung mit Mitteln versehen, welche einen Luftstrom in und/oder durch den Stichkanal und/oder aus dem Bodenauslass des Stichkanals hinaus fördern können.

Insbesondere gelten Strömungsklappen- oder Ventileinrichtungen, welche einen Strömungsquerschnitt durch den Stichkanal einstellen und/oder schalten können nicht als aktive Manipulationseinrichtung.

Erfindungsgemäß sind das Personentransportmittel, die Lüftungsvorrichtung und/oder das Zuluftkanalsystem derart ausgebildet, dass im Deckenbereich ausschließlich ein einziger, insbesondere in einer Längsrichtung des Personentransportmittels verlaufender, Deckenkanal zum Zuführen von Luft in den Innenraum vorgesehen ist, insbesondere wobei im Deckenbereich keine Mehrzahl von separaten Deckenkanälen zum separaten Zuführen von Kaltluft und/oder Warmluft vorgesehen sind. Die voranstehende Formulierung umfasst, dass im Deckenbereich minder-relevante Luftzuführungen in den Innenraum parallel zum einzigen Deckenkanal vorgesehen sein können, solange diese nur einen Volumenstrom aufweisen können, der weniger als 5 %, insbesondere weniger als 3 % des Volumenstroms durch den Deckenkanal beträgt. Von dem Deckenkanal, insbesondere im Wesentlichen in Querrichtung, wegführende Stichkanäle bzw. im Deckenbereich verlaufende Abschnitte solcher Stichkanäle gelten im Sinne des oben Gesagten nicht als Deckenkanäle.

Eine oder mehrere der voranstehenden Ausführungsformen ermöglicht, eine Lüftungsvorrichtung für ein Personentransportmittel darzustellen, welche nur minimalen Bauraum benötigt und trotzdem volle Funktionalität bezüglich der Bereitstellung unterschiedlich temperierter Luftströmungen in den Innenraum des Personentransportmittels gewährleisten kann. Denn es wird erstmalig erreicht, dass erwärmte oder bezüglich der Ist-Temperatur im Innenraum wärmere Luft zielgerichtet über Bodenauslässe und gekühlte oder kühlere Luft zielgerichtet über Deckenauslässe in den Innenraum des Personentransportmittels eingeleitet werden kann, ohne dass dafür unterschiedliche Zuluftkanäle für unterschiedlich temperierte Luftströmungen vorgesehen sein müssten. Gemäß dem voranstehend Ausgeführten bleibt die Manipulationseinrichtung inaktiv, wenn gekühlte Luft in den Innenraum eingeleitet werden soll, wohingegen die Manipulationseinrichtung aktiviert wird, wenn erwärmte Luft in den Innenraum zu bringen ist. Somit strömt gekühlte oder kühlere Luft bei inaktiver Manipulationseinrichtung von sich aus durch den Deckenauslass in den Innenraum. Im Gegensatz dazu bewirkt die aktive Manipulationseinrichtung, dass erwärmte oder wärmere Luft aktiv zum Bodenauslass des Stichkanals gefördert wird, sodass der Volumenstrom der durch den Deckenkanal strömenden Luft im Wesentlichen ausschließlich durch den Bodenauslass bzw. durch die Bodenauslässe in den Innenraum gelangt. Die Formulierung *"*im Wesentlichen*"* bedeutet in diesem Zusammenhang, dass mindestens 70%, insbesondere mindestens 80 %, bevorzugt mindestens 90 %, besonders bevorzugt mindestens 97 % des Gesamtvolumenstroms der aus dem Klimagerät ausströmenden Luft durch den Bodenauslass oder durch die Bodenauslässe in den Innenraum strömt.

Gemäß einer weiteren Ausgestaltung ist der Deckenauslass oder sind alle Deckenauslässe mit einer passiven Klappeneinrichtung versehen, welche einen Luftstrom stets aus dem Deckenkanal in den Innenraum gestattet, jedoch einen Luftstrom in entgegengesetzter Richtung aus dem Innenraum in den Deckenkanal selbsttätig verhindert.

Im Kontext einer Weiterentwicklung der Erfindung wird offenbart, dass im Deckenbereich keine weiteren Kanäle zum Führen von Luft, insbesondere zum Zuführen und/oder zum Abführen, vorgesehen sind, sodass der Deckenkanal den einzigen und ausschließlichen luftführenden Strömungskanal im Deckenbereich des Personentransportmittels darstellt. Insbesondere sind im Deckenbereich keine Einlassöffnungen eines Abluftkanals vorgesehen. Auf diese Weise steht der Bauraum im Deckenbereich im Wesentlichen ausschließlich zum Zuführen von Luft, insbesondere mithilfe des ausschließlich vorgesehenen Deckenkanals, zur Verfügung.

Das Zuluftkanalsystem weist mindestens zwei Stichkanäle auf, welche insbesondere bezüglich einer Längsrichtung beidseitig vom Deckenkanal, beispielsweise in Querrichtung nach rechts und links, wegführen.

Jeder Stichkanal ist mit einer dazugehörigen aktiven Manipulationseinrichtung ausgestattet.

Gemäß einer weiteren, zusätzlichen oder alternativen Ausführungsform kann beidseitig vom Deckenkanal wegführend jeweils eine Mehrzahl von Stichkanälen vorhanden sein, die jeweils rechts und links vom Deckenkanal wegführen. Dabei kann jeder der Mehrzahl der Stichkanäle auf beiden Seiten des Deckelkanals mit einer spezifischen, dazugehörigen aktiven Manipulationseinrichtung ausgerüstet sein. Diese alternative Ausführungsform offenbart, dass beidseitig jeweils eine Mehrzahl von Stichkanälen vom Deckenkanal weg führt, wobei optional nicht zwingend nur ein einziger Deckenkanal in Längsrichtung vorgesehen sein muss.

Die Manipulationseinrichtung weist mindestens eine Lüftereinheit auf, die bei Aktivierung einen Luftstrom aus dem Deckenkanal durch den Stichkanal hin zum Bodenauslass fördert. Die Manipulationseinrichtung kann dabei beispielsweise direkt am Übergang von Deckenkanal in den Stichkanal, in der Länge des Stichkanals oder im Bereich der Bodenauslässe wirksam angeordnet sein.

Gemäß einer Ausgestaltung der voranstehenden Ausführungsformen ist die Lüftereinheit als Strömungsmaschine ausgebildet, beispielsweise als Ventilator, insbesondere als Axial-, Radial-, Diagonal- oder Querstromventilator.

Gemäß einer weiteren Ausgestaltungsform ist der Deckenkanal über mindestens 50 %, insbesondere über mindestens 60 %, bevorzugt über mindestens 80 % der Gesamtlänge des Innenraums in Längsrichtung des Personentransportmittels in Querrichtung zentral mittig angeordnet und/oder verläuft vollständig gerade in Längsrichtung. So wird erreicht, dass in Querrichtung beidseitig ähnlich vorgesehene Stichkanäle und deren Bodenauslässe mit einem im Wesentlichen gleichen Volumenstrom beaufschlagt werden.

Gemäß einer alternativen Ausgestaltungsform verläuft der Deckenkanal über mindestens 50 %, insbesondere über mindestens 60 %, bevorzugt über mindestens 80 % der Gesamtlänge des Innenraums in Querrichtung außermittig, wobei ein rechtseitiger und ein linksseitiger Stichkanal derart ausgebildet sind und verlaufen, sodass ein effektiver Strömungswiderstand des Stichkanals von Deckenkanal zum Bodenauslass im Wesentlichen gleich oder ähnlich ist; dadurch wird erreicht, beispielsweise durch entsprechende Ausgestaltung der effektiven Strömungsquerschnitte, dass Volumenströme durch einen rechtsseitigen Stichkanal und einen linksseitigen Stichkanal im Wesentlichen gleich sind.

Weiterhin kann die Lüftungsvorrichtung derart konfiguriert sein, sodass im Bereich des Stichkanals zwischen dem Deckenkanal und dem Bodenauslass, eine Schalteinheit zum Unterbinden und/oder zum Tolerieren eines Luftstroms durch den Stichkanal angeordnet ist. Insbesondere kann die Manipulationseinrichtung mit einer solchen Schalteinheit zusätzlich ausgestattet sein. Dabei ist denkbar, die Schalteinheit als Strömungsklappen- oder Ventileinrichtung zu gestalten.

Alternativ zu dem Voranstehenden wird eine Ausführungsform eingeführt, wobei die Lüftungsvorrichtung neben der Manipulationseinrichtung keine weiteren passiven und/oder aktiven Manipulationsmittel zur Beeinflussung eines Luftstroms aus dem Deckenauslass und/oder durch den Stichkanal vorsieht. Insbesondere ist im Bereich des Stichkanals zwischen dem Deckenkanal und dem Bodenauslass, keine Schalteinheit, beispielsweise gestaltet als Strömungsklappen- oder Ventileinrichtung, zum Unterbinden und/oder zum Tolerieren eines Luftstroms durch den Stichkanal vorgesehen. Das bedeutet, dass im Bereich des Stichkanals allein die aktive Manipulationsvorrichtung dazu ausgebildet ist, einen Luftstrom durch den Stichkanal zu manipulieren und/oder zu tolerieren. Eine solche Ausführungsform bewirkt eine Reduzierung des Wartungsaufwands der Lüftungsvorrichtung, insbesondere da der Reinigungsbedarf reduziert wird.

In Erweiterung des Grundprinzips wird vorgeschlagen, dass die Lüftungsvorrichtung eine, insbesondere ausschließlich eine einzige, Filtervorrichtung aufweist, möglicherweise umfassend eine Mehrzahl von Filtereinheiten. Insbesondere ist die Filtervorrichtung zentral angeordnet, beispielsweise in unmittelbarer strömungstechnischer Umgebung des Klimageräts, der Luftschnittstelle oder an einem Einlassbereich des Deckenkanals.

Weiterhin wird ein Verfahren zum Betrieb eines Personentransportmittels nach einem der vorangestellten Ausführungsformen offenbart, welches mindestens die folgenden Schritte vorsieht:
Mithilfe des Klimageräts wird ein Luftstrom in das Zuluftkanalsystem bereitgestellt. Insbesondere wird dabei eine Temperatur des Luftstroms erfasst, Beispielsweise durch Bestimmung einer mittleren Temperatur, gemessen an einem spezifischen Ort, und/oder eingestellt, beispielsweise durch Erwärmen oder Abkühlen des Luftstroms. Insbesondere wird mittels einer Steuervorrichtung entschieden, ob ein Luftstrom in den Innenraum des Personentransportfahrzeug einzubringen ist, und falls ja, welche Soll-Temperatur der einzubringende Luftstrom aufzuweisen hat. Die Lüftungsvorrichtung saugt dazu Umgebungsluft und/oder Luft aus dem Innenraum des Personentransportmittels an, konditioniert diese gegebenenfalls und fördert diese in das Zuluftkanalsystem.

Das Verfahren ist dabei so ausgebildet, dass mindestens ein Warmluftbetriebsmodus und ein Kaltluftbetriebsmodus definiert werden. Die Manipulationseinrichtung wird derart angesteuert wird, sodass im Warmluftbetriebsmodus ein, insbesondere erwärmter, Luftstrom mindestens vorwiegend aus dem Bodenauslass aus strömt, und/oder das im Kaltluftbetriebsmodus ein, insbesondere gekühlter, Luftstrom mindestens vorwiegend aus dem Deckenauslass ausströmt.

Gemäß einer Ausführungsform wird die Manipulationseinrichtung derart angesteuert, sodass im Warmluftbetriebsmodus mindestens 70 %, insbesondere mindestens 80 %, bevorzugt mindestens 90 % des in das Zuluftkanalsystem bereitgestellten Luftstroms aus dem Bodenauslass ausströmt. Insbesondere erfolgt die Ansteuerung der Manipulationseinrichtung so, dass im Warmluftbetrieb im Wesentlichen keine Luft aus dem Deckenauslass ausströmt. Der Begriff *"*im Wesentlichen*"* ist dabei so zu verstehen, dass maximal 95 % des in das Zuluftkanalsystem bereitgestellten Luftstroms des Klimageräts aus dem Bodenauslass stammt, und maximal 5 %, bevorzugt maximal 2 % des Luftstroms aus dem Deckenauslass ausströmt.

Das im voranstehenden Ausgeführte gilt analog für den Kaltluftbetrieb, jedoch soll hier der Luftstrom aus dem Deckenauslass fließen. Entsprechend wird die Manipulationseinrichtung im Kaltluftbetrieb derart angesteuert, sodass mindestens 70 %, insbesondere mindestens 80 %, bevorzugt mindestens 90 %, des bereitgestellten Luftstroms aus dem Deckenauslass ausströmt. Insbesondere erfolgt die Ansteuerung der Manipulationseinrichtung derart, dass im Wesentlichen keine gekühlte Luft aus dem Bodenauslass ausströmt.

Weiterhin kann das Verfahren derart ausgebildet sein, dass die Entscheidung, ob die Lüftungsvorrichtung im Warmluftbetrieb oder im Kaltluftbetrieb gefahren wird in Abhängigkeit von einer Temperaturdifferenz zwischen Ist-Temperatur im Innenraum und einer Soll-Temperatur des Luftstroms getroffen wird. Ist die Soll-Temperatur höher als die Ist-Temperatur - der Innenraum des Personentransportmittels soll also erwärmt werden - so wird die Lüftungsvorrichtung im Warmluftbetrieb betrieben. Entsprechend wird der Kaltluftbetrieb ausgewählt, wenn die Soll-Temperatur geringer als die Ist-Temperatur des Innenraums ist, und der Innenraum somit gekühlt werden soll.

Zusätzlich oder alternativ zur voranstehend beschriebenen Ausgestaltung des Verfahrens, kann die Manipulationseinrichtung derart angesteuert werden, sodass eine Quantität des Volumenstroms durch den Stichkanal in Abhängigkeit von der Temperatur des Luftstroms, und/oder in Abhängigkeit von einer Temperaturdifferenz zwischen Ist-Temperatur im Innenraum und einer Soll-Temperatur des Luftstroms eingestellt wird. Denkbar ist dabei, dass Warmluftbetrieb und Kaltluftbetrieb kontinuierlich ineinander übergehen, und je nach Temperaturdifferenz die Manipulationseinrichtung derart angesteuert wird, sodass eine spezifische Verteilung der Volumenströme durch den Deckenauslass und durch den Bodenauslass einstellbar ist. Wird beispielsweise festgestellt, dass Ist- und Soll-Temperatur im Wesentlichen gleich sind, so kann gemäß eines zwischen Betriebs die Manipulationseinrichtung derart angesteuert werden, sodass der Luftstrom sowohl aus dem Deckenauslass, als auch aus dem Bodenauslass, insbesondere in gleichen Teilen, in den Innenraum des Personentransportmittels einströmt.

Zusätzlich oder alternativ wird offenbart, dass das Personentransportmittel nach einer der im Voranstehenden diskutierten Ausführungsformen eine signaltechnische Verbindung zwischen einer Steuervorrichtung des Klimagerätes und der Manipulationseinrichtung aufweist, wobei dies dem Zweck der Ansteuerung der Manipulationseinrichtung durch die Steuerung des Klimageräts dient. Die Steuervorrichtung des Klimageräts und/oder die Manipulationseinrichtung sind dabei zur Ausführung eines Verfahrens gemäß einer der zuvor diskutierten Ausführungsformen des Verfahrens ausgebildet. Auf diese Weise wird erreicht, dass die Steuerung des Systems aus Klimagerät und/oder Manipulationseinrichtung durch eine dezidierte Steuervorrichtung übernommen werden kann.

Gemäß einer Weiterentwicklung der Erfindung wird ein Personentransportmittel gemäß eines oder mehrerer der im Voranstehend diskutierten Ausführungsformen offenbart, wobei das Zuluftkanalsystem eine Mehrzahl von Stichkanälen mit Manipulationseinrichtungen aufweist. Die Steuervorrichtung, das Klimagerät und/oder die Manipulationseinrichtung sind dabei so ausgebildet und/oder ansteuerbar, dass eine Verteilung eines durch das Klimagerät bereitgestellten Luftstroms zwischen verschiedenen Bodenauslässen ausschließlich mithilfe der Manipulationseinrichtungen erfolgt.

Die voranstehenden beschriebenen Ausführungsformen können beliebig, jedoch insbesondere aus Sicht des Fachmanns in sinnhafter Weise miteinander kombiniert werden, solange der resultierende Gegenstand zum Schutzbereich gehört, der durch die Ansprüche definiert ist; beispielsweise ist denkbar, dass das Personentransportmittel mehrere Klimageräte aufweist, welche gemeinsam das Zuluftkanalsystem speisen und insbesondere gemeinsam von einer Steuervorrichtung angesteuert werden.

### Kurzbeschreibung der Figuren

Die beiliegende Zeichnung veranschaulicht eine Ausführungsform und dient zusammen mit der Beschreibung der Erläuterung der Prinzipien der Erfindung. Die Elemente der Zeichnung sind relativ zueinander und nicht notwendigerweise maßstabsgetreu.
Fig. 1 zeigt ein Personentransportmittel gemäß einer exemplarischen Ausführungsform, und
Fig. 2 repräsentiert eine schematische, perspektivische Ansicht des Wagenkastens des Personentransportmittels gemäß Fig. 1.

### Ausführungsbeispiele

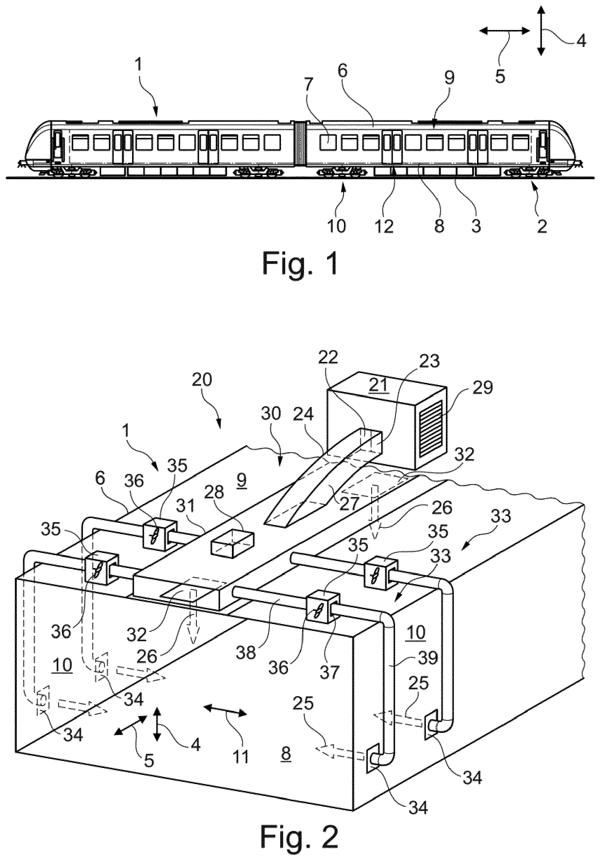

Mithilfe der Fig. 1 wird eine exemplarische Ausgestaltung eines Personentransportmittels 1 als Schienenfahrzeug wiedergegeben. Das Personentransportmittel 1 weist einen Wagenkasten 6 mit einem Innenraum 7 auf, wobei der Wagenkasten 6 über ein Räderwerk 2 rollbar auf Schienen 3 gelagert ist. Zur Versorgung des Innenraums 7 mit Luft, ist eine Lüftungsvorrichtung 20 vorgesehen.

Das Personentransportmittel 1 in seinem bestimmungsgemäßen Einsatz auf eine ebenen Fläche in den Geradeausfahrt, definiert eine Längsrichtung 5, eine Vertikalrichtung 4 und eine Querrichtung 11. Weiterhin sind im Kontext der Erfindung getätigte Aussagen wie "oben", "unten", "rechts" und/oder "links" bezüglich des bestimmungsgemäßen Einsatzes des Personentransportmittels 1 zu verstehen.

Fig. 2 zeigt einen perspektivischen Querschnitt durch den Wagenkasten 6 des Personentransportmittels 1 in schematischer Darstellung, sodass die Komponenten der Lüftungsvorrichtung 20 erkennbar werden. Die Lüftungsvorrichtung 20 umfasst mindestens eine Klimavorrichtung 21, eine Luftschnittstelle 24, und ein daran anschließendes Zuluftkanalsystem 30 mit einem Deckenkanal 31 und mindestens einem Stichkanal 33.

Der Innenraum 7 wird im Wesentlichen an einer Oberseite durch eine Fahrzeugdecke 9, an einer Unterseite durch einen Fahrzeugboden 8 und beidseitig - rechts, links - durch Seitenwände 10 gebildet, wobei nicht gezeigte Türvorrichtungen in den Seitenwänden 10 vorgesehen sein können.

Der Deckenkanal 31 verläuft mittig in einem Bereich der Fahrzeugdecke 9 (Deckenbereich) im Wesentlichen in Längsrichtung 5. Im gezeigten Ausführungsbeispiel ist der Deckenkanal 31 über der eigentlichen Fahrzeugdecke 9 angeordnet, wobei mithilfe von Deckenauslässen 32 eine strömungstechnische Verbindung zwischen einem Inneren des Deckenkanals 31 und dem Innenraum 7 hergestellt wird.

Der Deckenkanal 31 ist über die Luftschnittstelle 24 mit dem Klimagerät 21 verbunden, sodass ein Luftstrom 27 aus einem Warmluftauslass 22 und/oder aus einem Kaltluftauslass 23 des Klimageräts 21 in den Deckenkanal 31 gefördert werden kann. Im vorliegenden Beispiel kann das Klimagerät 21 auf einem Fahrzeugdach des Personentransportmittels 1 angeordnet sein, sodass über einen Einlass und eine Filtervorrichtung 29 Luft aus der Fahrzeugumgebung angesaugt werden kann. Die Filtervorrichtung 29 reinigt in zentraler Funktion den gesamten Luftstrom 27.

Denkbar ist, dass der Warmluftauslass 22 und/oder der Kaltluftauslass 23 direkt an einer Unterseite des Klimageräts 21 angeordnet sind und ohne Vorhandensein einer gegenständlichen Luftschnittstelle 24 direkt in den Deckenkanal 31 münden. In einem solchen Fall würde der Übergang zwischen Luftauslass 22, 23 in den Deckenkanal 31 als Luftschnittstelle 24 fungieren.

Weiterhin sind die Stichkanäle 33 vorgesehen, welche vom Deckenkanal 31 in einen Bereich des Fahrzeugbodens 8 (Bodenbereich) führen und dort in jeweils einen Bodenauslass 34 münden. Insbesondere ist in Querrichtung auf beiden Seiten des Deckenkanals 31 eine Mehrzahl von Stichkanälen 33 vorgesehen. Ein Stichkanal 33 weist dabei einen Deckenabschnitt 38 rund einen Seitenabschnitte 39 auf, wobei der Deckenabschnitt 38 im Deckenbereich der Fahrzeugdecke 9 und der Seitenabschnitte 39 im Seitenbereich der Seitenwand 10 maßgeblich angeordnet ist. Der Deckenabschnitt 38 gilt dabei nicht als Deckenkanal 31, insbesondere da der Deckenkanal 31 zumindest teilweise in Längsrichtung 5 verläuft, wohingegen der Deckenabschnitt 38 im Wesentlichen in Querrichtung 11 ausgerichtet ist. Somit besteht über die Luftschnittstelle 24, den Deckenkanal 31, den Stichkanal 33 eine strömungstechnische Verbindung zwischen dem Klimagerät 21 und den Bodenauslässen 34. In einem solchen Kanalsystem würde ein über die Luftschnittstelle 24 geförderter Luftstrom 27, je nach entsprechendem Strömungswiderstand, sowohl über die Deckenauslässe 32, als auch über die Bodenauslässe 34 in den Innenraum gelangen können.

Um spezifisch einstellen zu können, ob der Luftstrom 27 hauptsächlich, ausschließlich, im Wesentlichen ausschließlich, primär und/oder verstärkt aus einem Bodenauslas 34 oder aus einem Deckenauslass 32 in den Innenraum 7 einströmt, ist mindestens eine aktive Manipulationsvorrichtung 35 derart in Verbindung mit einem Stichkanal 33 konzipiert, sodass ein Volumenstrom durch den Stichkanal 33 zumindest teilweise manipuliert werden kann. Wird die Manipulationsvorrichtung 35 aktiviert, so würde der Luftstrom 27 primär über die Stichkanäle 33 und über die Bodenauslässe 34 in den Innenraum 7 transportiert werden. Dies tritt insbesondere ein, wenn ein summarischer Volumenstrom aller Stichkanäle 33 gleich oder größer ist als ein Volumenstrom des Luftstroms 27 durch die Luftschnittstelle 24.

Gemäß der Ausführungsform in Fig. 2 weist die Manipulationseinrichtung 35 eine Lüftereinheit 36 mit einem Axialventilator auf, wobei zusätzlich eine Schalteinheit 37 vorgesehen ist, um einen Volumenstrom durch den Stichkanal 33 vollständig zu unterbinden. Eine solche Ausführungsform ist jedoch nicht beschränkend zu interpretieren.

Alternativ ist auch denkbar, dass in der gesamten strömungstechnischen Verbindung zwischen Luftschnittstelle 24 und den Bodenauslässen 34 keine einzige Schalteinheit, Klappenanordnung und/oder Ventileinrichtung zum vollständigen Verschließen von Strömungsquerschnitten vorgesehen ist, sondern ausschließlich die aktive Manipulationseinrichtung 35, bzw. die Manipulationseinrichtungen 35 der mehreren Stichkanäle 33 dazu verwendet werden, um einstellen zu können, inwiefern der Luftstrom 27 aus Bodenauslässen 34 oder aus Deckenauslässen 32 in den Innenraum 7 gefördert wird.

Weiterhin kann eine Steuervorrichtung 28 vorgesehen sein, die zum einen die quantitative und qualitative Erzeugung von erwärmter Luft 25 oder von gekühlter Luft 26 mithilfe des Klimageräts 21 kontrollieren kann, und die zum anderen einen Fördervolumenstrom eines Luftstroms durch die Manipulationseinrichtung 35 einstellen kann. Entsprechend stellt das Klimagerät 21 über den Warmluftauslass 22 erwärmte Luft 25 und/oder über den Kaltluftauslass 23 gekühlte Luft 26 bereit.

Die Verwendung von den relativen Begriffen "gekühlt" und "erwärmt" kann in diesem Zusammenhang andeuten, dass gekühlte Luft 26 kälter bzw. dass erwärmte Luft 25 wärmer als im Innenraum 7 vorhandene Luft ist.

Die Steuervorrichtung 28, das Klimagerät 21 und die Manipulationseinrichtung 35 sind derart steuer- und regelungstechnisch ausgebildet, sodass erwärmte Luft 25 primär, hauptsächlich, ausschließlich oder im Wesentlichen über Bodenauslässe 34 in den Innenraum 7, und/oder sodass gekühlte Luft 26 primär, hauptsächlich, ausschließlich oder im Wesentlichen über Deckenauslässe 32 in den Innenraum 7 gefördert wird.

Entsprechend kann die Lüftungsvorrichtung 20 wie folgt betrieben werden: Über nicht dargestellte Temperatursensoren wird eine Ist-Temperatur der Luft im Innenraum 7 gemessen. Weiterhin wird definiert, ob die Ist-Temperatur im Innenraum 7 einer Soll-Temperatur entspricht. Insbesondere wird eine Temperaturdifferenz zwischen Ist-Temperatur und Soll-Temperatur bestimmt, sodass festgestellt werden kann, ob erwärmte Luft 25 oder gekühlte Luft 26 in den Innenraum 7 gefördert werden muss.

In dem Fall, dass der Innenraum 7 erwärmt werden soll, ist erwärmte Luft 25 zu fördern. Die Steuervorrichtung 28 aktiviert dann das Klimagerät 21 dahingehend, dass aus einem Warmluftauslass 22 erwärmte Luft 25 über die Luftschnittstelle 24 in den Deckenkanal 31 gefördert wird. Außerdem wird die aktive Manipulationseinrichtung 35 derart in Betrieb genommen, sodass der Luftstrom 27 der erwärmten Luft 25 zumindest teilweise, im Wesentlichen, oder ausschließlich über den Stichkanal 33 und den Bodenauslass 34, bzw. über die Mehrzahl der Stichkanäle 33 und Bodenauslässen 34, in den Innenraum 7 transportiert wird. Insbesondere wird der summierte Fördervolumenstrom der Manipulationseinrichtungen 35 so eingestellt, dass dieser zumindest teilweise, im Wesentlichen, und/oder mindestens so hoch ist wie der aus dem Klimagerät 21 austretenden Volumenstrom des Luftstroms 27.

Wenn der Innenraum 7 zu kühlen ist, wird das Klimagerät 21 so angesteuert, dass gekühlte Luft 26 austretend aus dem Kaltluftauslass 23 über die Luftschnittstelle 24 in den Deckenkanal 31 gefördert wird. Um zu erreichen, dass die gekühlte Luft 26 zumindest teilweise, im Wesentlichen oder ausschließlich über einen Deckenauslass 32 in den Innenraum 7 gelangt, so wird die Manipulationseinrichtung 35 inaktiv gehalten oder sogar zur Förderung eines gegenläufigen Volumenstroms bzw. zum Aufbau eines Gegendrucks in Betrieb genommen.

Wenngleich hierin eine spezifische Ausführungsform dargestellt und beschrieben worden ist, liegt es im Rahmen der vorliegenden Erfindung, die gezeigte Ausführungsform geeignet zu modifizieren, ohne vom Schutzbereich der vorliegenden Erfindung abzuweichen. Beispielsweise kann das Klimagerät 21 ausschließlich zum Bereitstellen von erwärmter Luft ausgebildet sein, wobei anstelle von aktiv gekühlter Luft unkonditionierte Umgebungsluft über das Klimagerät gefördert werden kann. Je nach Temperaturniveau dieser Umgebungsluft erfolgt die Einbringung in den Innenraum 7 über einen Deckenauslass 32 und/oder einen Bodenauslass 34. Zusätzlich oder alternativ ist denkbar, dass das Personentransportmittel 1 nicht als Schienenfahrzeug wie gezeigt in Fig. 1, sondern als Bus, Gondel oder als Flugzeug ausgebildet ist.

### Bezugszeichenliste

- 1: Personentransportmittel
- 2: Räderwerk
- 3: Schienen
- 4: Vertikalrichtung
- 5: Längsrichtung
- 6: Wagenkasten
- 7: Innenraum
- 8: Fahrzeugboden
- 9: Fahrzeugdecke
- 10: Seitenwand
- 11: Querrichtung

- 20: Lüftungsvorrichtung
- 21: Klimagerät
- 22: Warmluftauslass
- 23: Kaltluftauslass
- 24: Luftschnittstelle
- 25: erwärmte Luft
- 26: gekühlte Luft
- 27: Luftstrom
- 28: Steuervorrichtung
- 29: Filtervorrichtung
- 30: Zuluftkanalsystem
- 31: Deckenkanal
- 32: Deckenauslass
- 33: Stichkanal
- 34: Bodenauslass
- 35: Manipulationseinrichtung
- 36: Lüftereinheit
- 37: Schalteinheit
- 38: Deckenabschnitt
- 39: Seitenabschnitt

## Patentansprüche

1. Personentransportmittel (1) aufweisend
- einen Wagenkasten (6) mit einem Innenraum (7), der von einem Fahrzeugboden (8), einer Fahrzeugdecke (9) und Seitenwänden (10) begrenzt wird, und
- eine Lüftungsvorrichtung (20) mit einem Klimagerät (21) aufweisend einen Warmluftauslass (22) und einen Kaltluftauslass (23), einem Zuluftkanalsystem (30) zum Zuführen von Luft (25, 26) in den Innenraum (7) und mit einer zentrale Luftschnittstelle (24),
- wobei das Zuluftkanalsystem (30) einen im Deckenbereich der Fahrzeugdecke (9) angeordneten Deckenkanal (31) mit mindestens einem Deckenauslass (32), mindestens zwei vom Deckenkanal (31) abführende Stichkanäle (33) mit jeweils mindestens einem in einem Bodenbereich des Fahrzeugbodens (8) vorgesehenen Bodenauslass (34), wobei die mindestens zwei Stichkanäle (33) bezüglich einer Längsrichtung (5) beidseitig vom Deckenkanal (31) wegführen, und mindestens jeweils eine aktive Manipulationseinrichtung (35) für jeden Stichkanal (33) zum Manipulieren eines Luftstroms des Stichkanals (33) umfasst, wobei die jeweilige Manipulationseinrichtung (35) eine Lüftereinheit (36) ausgebildet zum Unterbinden, Tolerieren und/oder Unterstützen eines Luftstroms durch den Stichkanal (33) aufweist,
- wobei die zentrale Luftschnittstelle (24) den Warmluftauslass (22) und den Kaltluftauslass (23) des Klimageräts (21) zusammenführt und mit dem Deckenkanal (31) verbindet, und
- wobei das Personentransportmittel (1), die Lüftungsvorrichtung (20) und/oder das Zuluftkanalsystem (30) derart ausgebildet ist/sind, dass im Deckenbereich ausschließlich ein einziger, insbesondere in einer Längsrichtung (11) verlaufender, Deckenkanal (31) zum Zuführen von Luft (25, 26) in den Innenraum (7) vorgesehen ist.

2. Personentransportmittel (1) nach Anspruch 1, wobei das Zuluftkanalsystem (30) eine Mehrzahl von vom Deckenkanal (31) abführende Stichkanäle (33) jeweils mit mindestens einem im Bodenbereich des Fahrzeugbodens (8) vorgesehenen Bodenauslass (34) aufweist, wobei bezüglich einer Längsrichtung (5) des Wagenkastens (6) jeweils beidseitig eine Mehrzahl von vom Deckenkanal (31) wegführende Stichkanäle (33) vorgesehen sind, die jeweils rechts und links vom Deckenkanal (31) wegführen.

3. Personentransportmittel (1) nach einem der voranstehenden Ansprüche, wobei die Manipulationseinrichtung (35) weiterhin eine Schalteinheit (37) ausgebildet zum Unterbinden und/oder Tolerieren eines Luftstroms durch den Stichkanal (33) aufweist.

4. Personentransportmittel (1) nach einem der voranstehenden Ansprüche, wobei die Lüftungsvorrichtung (20) neben den Manipulationseinrichtungen (35) keine weiteren passiven und/oder aktiven Manipulationsmittel zur Beeinflussung einer Luftströmung aus dem Deckenauslass (32) vorsieht.

5. Personentransportmittel (1) nach einem der voranstehenden Ansprüche, wobei die Lüftungsvorrichtung (20) eine, insbesondere ausschließlich eine einzige, Filtervorrichtung (29) aufweist, welche derart zentral, insbesondere in unmittelbarer strömungstechnischer Umgebung des Klimageräts (21), zur zentralen Filterung der Luftströmung (27) vorgesehen ist.

6. Verfahren zum Betrieb einer Lüftungsvorrichtung (20) eines Personentransportmittels (1) gemäß einem der voranstehenden Ansprüche, aufweisend die folgenden Schritte:
- Bestimmen eines Betriebsmodus der Lüftungsvorrichtung (20), wobei diese mindestens in einem Warmluftbetriebsmodus oder in einem einen Kaltluftbetriebsmodus betrieben werden kann;
- Bereitstellen einer Luftströmung (27) in das Zuluftkanalsystem (30) durch das Klimagerät (21);
- Ansteuern der Manipulationseinrichtungen (35) derart, dass im Warmluftbetriebsmodus erwärmte Luft (25) mindestens vorwiegend aus dem Bodenauslass (34) ausströmt, und/oder dass im Kaltluftbetriebsmodus gekühlte Luft (26) mindestens vorwiegend aus dem Deckenauslass (32) ausströmt.

7. Verfahren, insbesondere nach Anspruch 6, zum Betrieb einer Lüftungsvorrichtung (20) eines Personentransportmittels (1) gemäß einem der voranstehenden Ansprüche 1 bis 5, aufweisend die folgenden Schritte:
- Bereitstellen einer Luftströmung (27) in das Zuluftkanalsystem (30) durch das Klimagerät (21);
- Ansteuern der Manipulationseinrichtung (35) in Abhängigkeit von einer Temperaturdifferenz zwischen einer Soll-Temperatur für den Innenraum und einer Ist-Temperatur in dem Innenraum (7).

8. Verfahren nach Anspruch 6 oder 7, wobei in einem Warmluftbetriebsmodus das Ansteuern der Manipulationseinrichtung (35) derart erfolgt, mindestens 70 %, insbesondere mindestens 80 %, bevorzugt mindestens 90 %, des bereitgestellten Luftstroms (27) aus dem Bodenauslass (34) ausströmt.

9. Verfahren nach einem der Ansprüche 6 bis 8, wobei in einem Kaltluftbetriebsmodus das Ansteuern der Manipulationseinrichtung (35) derart erfolgt mindestens 70 %, insbesondere mindestens 80 %, bevorzugt mindestens 90 %, des bereitgestellten Luftstroms (27) aus dem Deckenauslass (32) ausströmt.

10. Personentransportmittel (1) nach einem der voranstehenden Ansprüche 1 bis 5, aufweisend eine Steuervorrichtung (28) mindestens zur Ansteuerung der Manipulationseinrichtungen (35) und/oder des Klimageräts (21), wobei die Steuervorrichtung (28), das Klimagerät (21) und/oder die Manipulationseinrichtungen (35) zur Ausführung eines Verfahrens gemäß der Ansprüche 6 bis 9 geeignet ausgebildet sind.

11. Personentransportmittel (1) nach Anspruch 10, wobei die Steuervorrichtung (28), das Klimagerät (21) und/oder die Manipulationseinrichtung (35) derart ausgebildet und/oder ansteuerbar sind, dass eine Verteilung einer durch das Klimagerät (21) bereitgestellten Luftströmung (27) zwischen Deckenauslass (32) und Bodenauslass (34) ausschließlich mithilfe der Manipulationseinrichtungen (35) erfolgt.

12. Personentransportmittel (1) nach Anspruch 10 oder 11, wobei das Zuluftkanalsystem (30) eine Mehrzahl von Stichkanälen (33) mit Manipulationseinrichtungen (35) aufweist, wobei die Steuervorrichtung (28), das Klimagerät (21) und/oder die Manipulationseinrichtungen (35) derart ausgebildet und/oder ansteuerbar sind, dass eine Verteilung eines durch das Klimagerät (21) bereitgestellten Luftstroms (27) zwischen verschiedenen Bodenauslässen (34) ausschließlich mithilfe der Manipulationseinrichtungen (35) erfolgt.

## Claims

1. People transportation means (1) comprising
- a vehicle body (6) with an inner space (7) which is delimited by a vehicle floor (8), a vehicle ceiling (9) and side walls (10), and
- a ventilation device (20) with an air-conditioning unit (21) comprising a warm air outlet (22) and a cold air outlet (23), a supply air duct system (30) for supplying air (25, 26) into the inner space (7) and with a central air interface (24),
- wherein the supply air duct system (30) comprises a ceiling duct (31) arranged in the ceiling region of the vehicle ceiling (9) and having at least one ceiling outlet (32), at least two branch ducts (33) leading away from the ceiling duct (31) and each having at least one floor outlet (34) provided in a floor region of the vehicle floor (8), wherein the at least two branch ducts (33) lead away from the ceiling duct (31) on both sides with respect to a longitudinal direction (5), and at least one active manipulation device (35) for each branch duct (33) for manipulating an air flow of the branch duct (33), wherein the respective manipulation device (35) comprises a ventilator unit (36) configured for suppressing, tolerating and/or supporting an air flow through the branch duct (33),
- wherein the central air interface (24) brings together the warm air outlet (22) and the cold air outlet (23) of the air-conditioning unit (21) and connects them to the ceiling duct (31), and
- wherein the people transportation means (1), the ventilation device (20) and/or the supply air duct system (30) is/are configured such that in the ceiling region exclusively a single ceiling duct (31), in particular extending in a longitudinal direction (11), is provided for supplying air (25, 26) into the inner space (7).

2. People transportation means (1) according to claim 1, wherein the supply air duct system (30) comprises a plurality of branch ducts (33) leading away from the ceiling duct (31), each with at least one floor outlet (34) provided in the floor region of the vehicle floor (8), wherein, with respect to a longitudinal direction (5) of the vehicle body (6), in each case on both sides, a plurality of branch ducts (33) leading away from the ceiling duct (31) are provided which lead away in each case to the right and left of the ceiling duct (31).

3. People transportation means (1) according to one of the preceding claims, wherein the manipulation device (35) further comprises a switching unit (37) configured for preventing and/or tolerating an air flow through the branch duct (33).

4. People transportation means (1) according to one of the preceding claims, wherein, besides the manipulation devices (35), the ventilation device (20) does not provide any further passive and/or active manipulation means for influencing an airstream from the ceiling outlet (32).

5. People transportation means (1) according to one of the preceding claims, wherein the ventilation device (20) comprises a filter device (29), in particular exclusively a single filter device, which is provided such centrally, in particular in direct fluidic vicinity of the air-conditioning unit (21), for central filtering of the airstream (27).

6. A method for operating a ventilation device (20) of a people transportation means (1) according to one of the preceding claims, comprising the following steps:
- determining an operating mode of the ventilation device (20), wherein it is operable in at least a warm air operating mode or a cold air operating mode;
- providing an airstream (27) into the supply air duct system (30) by the air-conditioning unit (21);
- controlling the manipulation device (35) such that in the warm air operating mode heated air (25) flows out at least predominantly from the floor outlet (34), and/or that in the cold air operating mode cooled air (26) flows out at least predominantly from the ceiling outlet (32).

7. Method, in particular according to claim 6, for operating a ventilation device (20) of a people transportation means (1) according to one of the preceding claims 1 to 5, comprising the following steps:
- providing an airstream (27) into the supply air duct system (30) by the air-conditioning unit (21);
- controlling the manipulation device (35) depending on a temperature difference between a nominal temperature for the inner space and an actual temperature in the inner space (7).

8. Method according to claim 6 or 7, wherein in a warm air operating mode controlling of the manipulation device (35) is carried out such at least 70%, in particular at least 80%, preferably at least 90%, of the provided air flow (27) flows out of the floor outlet (34).

9. Method according to one of claims 6 to 8, wherein in a cold air operating mode controlling of the manipulation device (35) is carried out such at least 70%, in particular at least 80%, preferably at least 90%, of the provided air flow (27) flows out of the ceiling outlet (32).

10. People transportation means (1) according to one of the preceding claims 1 to 5, comprising a control device (28) at least for controlling the manipulation devices (35) and/or the air-conditioning unit (21), wherein the control device (28), the air-conditioning unit (21) and/or the manipulation devices (35) are suitably configured for executing a method according to claims 6 to 9.

11. People transportation means (1) according to claim 10, wherein the control device (28), the air-conditioning unit (21) and/or the manipulation device (35) are configured and/or controllable such that a distribution of an airstream (27) provided by the air-conditioning unit (21) between the ceiling outlet (32) and the floor outlet (34) is carried out exclusively by means of the manipulation devices (35).

12. People transportation means (1) according to claim 10 or 11, wherein the supply air duct system (30) comprises a plurality of branch ducts (33) with manipulation devices (35), wherein the control device (28), the air-conditioning unit (21) and/or the manipulation devices (35) are configured and/or controllable such that a distribution of an air flow (27) provided by the air-conditioning unit (21) between different floor outlets (34) is carried out exclusively by means of the manipulation devices (35).

## Revendications

1. Moyen de transport de personnes (1) présentant
- une caisse de voiture (6) comportant un espace intérieur (7), lequel est délimité par un plancher de véhicule (8), un plafond de véhicule (9) et des parois latérales (10), et
- un dispositif de ventilation (20) comportant un climatiseur (21) présentant une sortie d'air chaud (22) et une sortie d'air froid (23), un système de conduits d'air entrant (30) permettant d'introduire de l'air (25, 26) dans l'espace intérieur (7), et comportant une interface d'air centrale (24),
- dans lequel le système de conduits d'air entrant (30) comprend un conduit de plafond (31) disposé dans la zone de plafond du plafond de véhicule (9) et comportant au moins une sortie de plafond (32), au moins deux conduits d'embranchement (33) s'éloignant du conduit de plafond (31) et comportant respectivement au moins une sortie de plancher (34) prévue dans une zone de plancher du plancher de véhicule (8), dans lequel les au moins deux conduits d'embranchement (33) s'écartent des deux côtés du conduit de plafond (31) par rapport à une direction longitudinale (5), et au moins respectivement un appareil de manipulation (35) actif pour chaque conduit d'embranchement (33) pour la manipulation d'un écoulement d'air du conduit d'embranchement (33), dans lequel l'appareil de manipulation (35) respectif présente une unité formant ventilateur (36) conçue pour empêcher, tolérer et/ou assister un écoulement d'air à travers le conduit d'embranchement (33),
- dans lequel l'interface d'air centrale (24) rassemble la sortie d'air chaud (22) et la sortie d'air froid (23) du climatiseur (21) et les relie au conduit de plafond (31), et
- dans lequel le moyen de transport de personnes (1), le dispositif de ventilation (20) et/ou le système de conduits d'air entrant (30) sont conçus de telle sorte que, dans la zone de plafond, uniquement un seul conduit de plafond (31), s'étendant en particulier dans une direction longitudinale (11), est prévu pour l'introduction d'air (25, 26) dans l'espace intérieur (7).

2. Moyen de transport de personnes (1) selon la revendication 1, dans lequel le système de conduits d'air entrant (30) présente une pluralité de conduits d'embranchement (33) s'éloignant du conduit de plafond (31) et comportant respectivement au moins une sortie de plancher (34) prévue dans la zone de plancher du plancher de véhicule (8), dans lequel, par rapport à une direction longitudinale (5) de la caisse de voiture (6), une pluralité de conduits d'embranchement (33) s'écartant du conduit de plafond (31) sont prévus respectivement des deux côtés, lesquels s'écartent respectivement à droite et à gauche du conduit de plafond (31).

3. Moyen de transport de personnes (1) selon l'une des revendications précédentes, dans lequel l'appareil de manipulation (35) présente en outre une unité de commutation (37) conçue pour empêcher et/ou tolérer un écoulement d'air à travers le conduit d'embranchement (33).

4. Moyen de transport de personnes (1) selon l'une des revendications précédentes, dans lequel le dispositif de ventilation (20) ne prévoit pas, en plus des appareils de manipulation (35), d'autres moyens de manipulation passifs et/ou actifs permettant d'influencer un écoulement d'air provenant de la sortie de plafond (32).

5. Moyen de transport de personnes (1) selon l'une des revendications précédentes, dans lequel le dispositif de ventilation (20) présente un dispositif de filtrage (29), en particulier uniquement un seul dispositif de filtrage, qui est ainsi prévu au centre, en particulier dans l'environnement en communication fluidique immédiat du climatiseur (21), pour le filtrage central de l'écoulement d'air (27).

6. Procédé permettant de faire fonctionner un dispositif de ventilation (20) d'un moyen de transport de personnes (1) selon l'une des revendications précédentes, présentant les étapes suivantes :
- détermination d'un mode de fonctionnement du dispositif de ventilation (20), dans lequel ledit dispositif de ventilation peut fonctionner au moins dans un mode de fonctionnement d'air chaud ou dans un un mode de fonctionnement d'air froid ;
- fourniture d'un écoulement d'air (27) dans le système de conduits d'air entrant (30) par le climatiseur (21) ;
- commande des appareils de manipulation (35) de telle sorte que, dans le mode de fonctionnement d'air chaud, de l'air chauffé (25) s'écoule au moins principalement par la sortie de plancher (34), et/ou que, dans le mode de fonctionnement d'air froid, de l'air refroidi (26) s'écoule au moins principalement par la sortie de plafond (32).

7. Procédé, en particulier selon la revendication 6, permettant de faire fonctionner un dispositif de ventilation (20) d'un moyen de transport de personnes (1) selon l'une des revendications précédentes 1 à 5, présentant les étapes suivantes :
- fourniture d'un écoulement d'air (27) dans le système de conduits d'air entrant (30) par le climatiseur (21) ;
- commande de l'appareil de manipulation (35) en fonction d'une différence de température entre une température de consigne pour l'espace intérieur et une température réelle dans l'espace intérieur (7).

8. Procédé selon la revendication 6 ou 7, dans lequel, dans un mode de fonctionnement d'air chaud, la commande de l'appareil de manipulation (35) est effectuée de telle sorte qu'au moins 70 %, en particulier au moins 80 %, de préférence au moins 90 %, de l'écoulement d'air (27) fourni s'écoule par la sortie de plancher (34).

9. Procédé selon l'une des revendications 6 à 8, dans lequel, dans un mode de fonctionnement d'air froid, la commande de l'appareil de manipulation (35) est effectuée de telle sorte qu'au moins 70 %, en particulier au moins 80 %, de préférence au moins 90 %, de l'écoulement d'air (27) fourni s'écoule par la sortie de plafond (32).

10. Moyen de transport de personnes (1) selon l'une des revendications précédentes 1 à 5, présentant un dispositif de commande (28) au moins pour la commande des appareils de manipulation (35) et/ou du climatiseur (21), dans lequel le dispositif de commande (28), le climatiseur (21) et/ou les appareils de manipulation (35) sont configurés de manière à être aptes à exécuter un procédé selon les revendications 6 à 9.

11. Moyen de transport de personnes (1) selon la revendication 10, dans lequel le dispositif de commande (28), le climatiseur (21) et/ou l'appareil de manipulation (35) sont configurés et/ou peuvent être commandés de telle sorte qu'une répartition d'un écoulement d'air (27) fourni par le climatiseur (21) est effectuée entre la sortie de plafond (32) et la sortie de plancher (34) uniquement à l'aide des appareils de manipulation (35).

12. Moyen de transport de personnes (1) selon la revendication 10 ou 11, dans lequel le système de conduits d'air entrant (30) présente une pluralité de conduits d'embranchement (33) comportant des appareils de manipulation (35), dans lequel le dispositif de commande (28), le climatiseur (21) et/ou les appareils de manipulation (35) sont configurés et/ou peuvent être commandés de telle sorte qu'une répartition d'un écoulement d'air (27) fourni par le climatiseur (21) est effectuée entre différentes sorties de plancher (34) uniquement à l'aide des appareils de manipulation (35).
